# EUROPÄISCHE PATENTSCHRIFT

(11) **EP 3 281 914 B1**
(45) Veröffentlichungstag und Bekanntmachung des Hinweises auf die Patenterteilung: **01.03.2023**
(21) Anmeldenummer: 16183742.2
(22) Anmeldetag: 11.08.2016
(51) Int. Cl.: C01B 33/12, C01B 33/18

(54) **VERFAHREN ZUR HERSTELLUNG VON HOCHDISPERSEM OBERFLÄCHENREICHEM SILIZIUMDIOXID AUS PFLANZEN**
METHOD FOR PRODUCING HIGHLY DISPERSED SURFACE-RICH SILICON DIOXIDE FROM PLANTS
PROCEDE DE FABRICATION D'OXYDE DE SILICIUM A SURFACE SPECIFIQUE ELEVEE A FORTE DISPERSION A PARTIR DE PLANTES

(43) Veröffentlichungstag der Anmeldung: 14.02.2018
(73) Patentinhaber: Partchem GmbH, 02763 Bertsdorf-Hörnitz (DE)
(72) Erfinder: NÖSKE, Robert, 14469 Potsdam (DE); STRAUCH, Peter, 14482 Potsdam (DE)
(74) Vertreter: Häntzschel, Nadine

(56) Entgegenhaltungen:
- WO-A1-02/066372
- US-B1- 9 403 688
- SAPEI, L.; NÖSKE, R.; STRAUCH, P; PARIS, O.: "Isolation of Mesoporous Biogenic Silica from the Perennial Plant Equisetum hyemale", CHEM. MATER., Bd. 20, 2008, Seiten 2020-2025, XP002767289, DOI: 10.1021/cm702991f
- NEUMANN, M.; WAGNER, S.; NÖSKE, R.; TIERSCH, B.; STRAUCH, P.: "Morphology and Structure of Biomorphous Silica Isolated fromEquisetum hyemale and Equisetum telmateia", Z. NATURFORSCH., Bd. 65B, 2010, Seiten 1113-1120, XP002767290,

## Beschreibung

### TECHNISCHES GEBIET

Die vorliegende Erfindung betrifft ein Verfahren zur Herstellung von hochdispersem oberflächenreichem Siliziumdioxid aus Pflanzen als nachwachsende Rohstoffen, insbesondere Pflanzen mit einem Siliziumanteil in der Trockensubstanz von grösser als 2 %, beispielsweise Farne, Schachtelhalme und zahlreiche Vertreter der Monokotylen (Einkeimblättrigen).

### STAND DER TECHNIK

In verschiedenen Bereichen der industriellen Produktion und unseres Alltages spielen hochdisperse, nanoskalige Materialien auf Basis von Siliziumdioxid eine unverzichtbare Rolle. So sind die Wirkstoffe in den meisten tablettenförmigen Medikamenten auf diesem physiologisch unbedenklichen Trägermaterial aufgetragen, dieses passiert den menschlichen Organismus und wird wieder ausgeschieden. Damit die Wirkstoffe des eigentlichen Präparats ihre optimale Wirkung im menschlichen Körper entfalten können, muss das Trägermaterial eine ausreichend große Oberfläche aufweisen. Gleiches gilt auch für entsprechende Produkte aus dem Bereich der kosmetischen Industrie.

Ähnliche Forderungen an eine große Oberfläche stellen auch die Produzenten von Katalysatoren, bei welchen die eigentlich katalytisch wirksame Komponente meist auf einem chemisch inerten oberflächenreichen Trägermaterial aufgebracht ist.

In den Bereichen der Lack- und Farbmittelindustrie sowie bei den Herstellern von Folien sind die Anforderungen sehr ähnlich. Hier kommt es nicht nur auf die große Oberfläche alleine an, sondern vor allem auf die Feinheit der eingesetzten Siliziumdioxidqualitäten. In transparenten Lacken und Folien wird über das geeignete Siliziumdioxid eine Stabilisierung durch Vernetzung der Pigment- / Füllstoffpartikel erreicht.

Die Industrie fertigt nach verschiedenen hydrolytischen, hydrothermalen und plasmachemischen Verfahren eine Vielzahl einzelner Qualitäten von Siliziumdioxid. Diese werden von den Herstellern gut charakterisiert und mit den entsprechenden Zertifikaten auf dem Markt, beispielsweise unter den Handelsnamen AEROSIL^{®}, Cabosil^{®}, HDK^{®}, ACEMATT^{®} oder SIDENT^{®} angeboten.

Hierbei wird häufig durch Hydrolyse von Siliziumtetrachlorid oder entsprechenden Analoga in einer Knallgasflamme (Flammenhydrolyse) hochdisperse "pyrogene" Kieselsäure von über 99,8 % Siliziumdioxid - Gehalt hergestellt, wie aus Klein, K.: Chemisch-technische Industrie 64 (1968) 849-858, Winkeler, H.: Kautschuk Gummi Kunststoffe 30 (1977) 381-388, Ferch, H.: Farbe + Lack 85 (1979) 651-657, oder auch Ferch, H., Seibold, K.: Farbe & Lack 90 (1984) 88-98 bekannt. Das Herstellungsverfahren wurde 1940 von Harry Kloepfer bei der Degussa entwickelt worden, siehe Zitat in Dittrich, G., Offermanns, H., Schlosser, H. Jr.: Chem. Exp. Technol. 3 (1977) 151-162 und ist bis in die Gegenwart von der DEGUSSA (heute EVONIK DEGUSSA GmbH) weiterentwickelt und modifiziert worden. Das so hergestellte Siliziumdioxid ist aus amorphen, kugelförmigen Teilchen aufgebaut. Diese besitzen einen Durchmesser von 10-20 nm, bei einem Volumen von ca. 15 ml je g hat das Siliziumdioxid eine Oberfläche von 100-400 m² je g.

Von erheblichem Nachteil sind bei dieser bekannten technischen Lösung, dass die eingesetzten Ausgangschemikalien selber hergestellt werden müssen (das ist je nach Ausgangschemikalie mit nicht unerheblichen Kosten verbunden), die exakte Beherrschbarkeit des Prozesses einen erheblichen technologischen Aufwand erfordert und das sich aus den Verfahrensabläufen die Bildung von Chlor / Chlorwasserstoff als Nebenprodukt ergibt (abhängig vom gewählten Verfahren).

Aus der Literatur, siehe Voronkov, M.G., Zelcan, G.I., Lukevits, E.: Silizium und Leben, Akademie-Verlag, Berlin, 1975, S. 55-99, Mengel, K., Kirby, E. A.: Principles of plant nutrition, Kluwer Academic Publishers, Dordrecht, 2001, S. 643-649, und Ma, F.A., Miyake, Y., Takahashi, E: Silicon in Agriculture, Studies in Plant Science 8 (Eds. L. E. Datnoff, G. H. Synder, G. H. Korndörfer), Elsevier, Amsterdam, Oxford, 2001, chapter 2, S. 17-39 ist bekannt, dass ausgewählte Pflanzen vermehrt Silizium aus der Bodenlösung aufnehmen und als amorphe Kieselsäure in die Zellwände einlagern. Eigene wissenschaftliche Untersuchungen hierzu führten bislang zu einer Labormethode zur Isolation des reinen Siliziumdioxds mit maximalen Oberflächen von z. T. weit unter 500 m² je g, wie es in Sapei, L., Gierlinger, N., Hartmann, J., Nöske, R., Strauch, P., Paris, O.: Bioanal. Chem. 289 (2007) 1249-1257, Sapei, L., Nöske, R., Strauch, P:, Paris, O.: Chem. Mater. 20 (2008) 2020-2025, und Neumann, M., Wagner, S., Nöske, R., Tiersch, B., Strauch, P.: Z. Naturforsch. 65b (2010) 1113 - 1120 beschrieben ist.

Aus der EP 1 452 637 A1 ist eine funktionelle Pflanzenfaser, ein wasserverbesserndes Material und ein bodenschützendes Material bekannt.

Aus der WO 2008/016701 ist eine biogene Kieselsäure aus kieselsäurehaltigem Pflanzenmaterial wie etwa Reishülsen bekannt.

Aus Sapei, l. et al. « Isolation of Mesoporous Biogenic Silica from the Perennial Plant Equisetum hyemale" in CHEM. MATER. Bd. 20, Seiten 2020-2025 (XP 002767289) ist ein Verfahren der eingangs genannten Art bekannt.

Aus "Neumann, M. et al. "Morphology and Structure of Biomorphous Silica Isolated from Equisetum hyemale and Equisetm telmateia" in Z. NATURFORSCH. Bd 65B, 2010, Seiten 1113-1120 (XP 002767290) ist ein weiteres solches Verfahren bekannt.

WO 02/066372 A1 beschreibt ein Verfahren zur Extraktion von pflanzlichen Stoffen, insbesondere Kieselsäure aus Reishülsen.

Aus der US 9,403,688 B1 ist ein Verfahren zur Herstellung von biogenen Siliciumdioxidnanopartikeln bekannt, mit den Schritten des Vorbehandelns von Samenhüllen einer biogenen Quelle mit einer Säure, um säurebehandelte Samenhüllen zu bilden; des Einbringens der säurebehandelten Samenschalen in einen Autoklaven bei einer Temperatur von mehr als 100 ° C für etwa 2 Stunden unter einem festen Druck; des Isolierens der Samenhülsen; des Waschens der Samenhülsen mit Wasser; der Lufttrocknung der Samenhülsen; des Kalzinierens der Samenhülsen in einem Temperaturbereich von 500 ° C bis 700 ° C für mindestens eine Stunde in einem Ofen zur Herstellung biogener Silica-Nanopartikel.

### DARSTELLUNG DER ERFINDUNG

Ausgehend von diesem Stand der Technik liegt der Erfindung unter anderem die Aufgabe zu Grunde, biogenes Siliziumdioxid mit grösseren Oberflächen je Gewichtseinheit, insbesondere von über 600 m² je g, aus nachwachsenden Rohstoffen zu gewinnen.

Die Erfindung betrifft ein Verfahren zur Gewinnung von hochdispersem Siliziumdioxid aus nachwachsenden Rohstoffen, wobei sich das nach diesem Verfahren gewonnene Siliziumdioxid durch eine größere Oberfläche als bei kommerziellen Qualitäten bekannt und einzigartige biogene Strukturierung auszeichnet.

Das Verfahren zur Herstellung von hochdispersem oberflächenreichem Siliziumdioxid aus Pflanzen als nachwachsende Rohstoffen ist durch die Verfahrensschritte gekennzeichnet:
a) Bereitstellen von getrockneten Pflanzen mit einem Siliziumanteil von grösser 2 Gewichtsprozent als Pflanzenmaterial,
b) Nasschemische Behandlung des getrockneten Pflanzenmaterials mit einer sauren Lösung über eine vorbestimmte Standzeit in der Siedehitze,
c) Abtrennen und Trocknen des nasschemisch behandelten Pflanzenmaterials zu einem Feststoffrückstand, und
d) Tempern des Feststoffrückstandes bei einer Tempertemperatur zwischen 300 und 550 °C über eine Haltezeit von 30 Minuten bis 1000 Stunden zu einem Feststoffagglomerat, das im wesentlichen spontan zu Siliziumdioxidnanopartikeln zerfällt.

Es wird somit ein Verfahren vorgestellt, welches ohne großen technischen Aufwand in wenigen Arbeitsschritten die Gewinnung von hochdispersem oberflächenreichen Siliziumdioxid aus nachwachsenden Rohstoffen zulässt. Dabei wird aus leicht verfügbaren Siliziumhaltigen nachwachsenden Rohstoffen die enthaltene Kieselsäure isoliert, während die einzigartige primäre biogene Strukturierung erhalten bleibt. Im Vergleich zu pyrolytischen und plasmachemischen Verfahren (Temperaturen zwischen 1000 °C und 8000 °C) erfolgt die notwendige thermische Nachbehandlung bei relativ niedrigen Temperaturen von nur wenigen hundert °C. Da auch in diesem Verfahren Chlorwasserstoff - hier die wässrige Lösung - eingesetzt werden muss, wurde eine Variante gefunden, bei welcher die effektive Konzentration der Säure deutlich herabgesetzt werden konnte und diese bei geschickter Prozessführung im Kreislauf geführt und wieder verwendet werden kann.

Ein Vorteil der Erfindung besteht darin, dass es mit diesem Verfahren möglich ist, ohne erheblichen technischen Aufwand und bei deutlich niedrigerem Energiebedarf hochdisperses und oberflächenreiches Siliziumdioxid mit entsprechender chemischer Reinheit unter Beibehaltung der biogenen Strukturierung aus nachwachsenden Rohstoffen zu gewinnen. Als pflanzliche Rohstoffe kommen hierbei alle Pflanzenmaterialien, ganze Pflanzen oder Teile von Pflanzen in Frage, deren Siliziumdioxidgehalt in der Trockensubstanz 2 % übersteigt, das betrifft alle Arten in der Gattung der Schachtelhalmgewächse, insbesondere Equisetales und Farne allgemein, die europäische Lärche sowie die gemeine Fichte aus der Ordnung der Kiefernartigen und aus der Familie der Süßgräser alle Schilf-, Hafer-, Gerste-, Roggen-, Weizen- Reis- und Bambusarten.

Ein wesentlicher Vorteil des Verfahrens nach der Erfindung ist darüber hinaus, dass 100 % des biogenen Siliziumdioxids mit diesem Verfahren aus nachwachsenden Rohstoffen gewonnen werden kann; mit anderen Worten: es treten keine Verluste auf.

Bei dem Verfahren kann nach dem Bereitstellen des getrockneten Pflanzenmaterials ein Verfahrensschritt des Zerkleinerns des Pflanzenmaterials auf eine Korngrösse von kleiner als 1 Millimeter, bevorzugt kleiner als 0,5 Millimeter, vorgesehen sein.

Die saure Lösung kann zwischen 20 und 50 Volumenprozent azeotroper Salzsäure und zwischen 80 und 50 Volumenprozent Wasser umfassen. Die Standzeit der nasschemischen Behandlung kann dabei abhängig von der Temperatur zwischen 1 Minute und 10 Stunden betragen, vorzugsweise zwischen 15 Minuten und 1 Stunde, bevorzugt 30 Minuten.

Das Tempern kann vorteilhafterweise in vier Unterschritte unterteilt werden, die ein schrittweises Aufheizen beinhalten, insbesondere:
d1) Rasches Erwärmen des Feststoffrückstandes auf einen ersten Temperaturschwellwert,
d2) Mittelschnelles Erwärmen des Feststoffrückstandes von dem ersten auf einen zweiten Temperaturschwellwert,
d3) Langsames Erwärmen des Feststoffrückstandes von dem zweiten auf die Tempertemperatur, und
d4) Halten der Tempertemperatur des Feststoffrückstandes für die besagte Haltezeit.

Dabei kann dann das rasche Erwärmen zwischen 2 und 5 mal so schnell in Kelvin/Minute durchgeführt werden wie das mittelschnelle Erwärmen und das langsame Erwärmen kann zweimal bis fünfmal langsamer sein wie das mittelschnelle Erwärmen, insbesondere können die Erwärmungsraten mit 10 K/min, 2 bis 5 K/min, beziehungsweise mit 1 K/min angegeben werden. Dabei kann der erste Temperaturschwellwert 100 °C betragen und der zweite Temperaturschwellwert 250 °C.

Weitere Ausführungsformen sind in den abhängigen Ansprüchen angegeben.

Das gesamte, im Ausgangsbiomaterial enthaltene Siliziumdioxid konnte nach diesem Verfahren gewonnen werden, die Ausbeute bzw. der Umsatzgrad ist mit nahezu 100 % anzugeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein rasterelektronenmikroskopisches Bild von biogenem Siliziumdioxid nach einem Ausführungsbeispiel der Erfindung; und
- Fig. 2: einen Verfahrensablauf gemäss einem Ausführungsbeispiel der Erfindung.

### BESCHREIBUNG BEVORZUGTER AUSFÜHRUNGSFORMEN

Bei dem Verfahren nach der Erfindung sind als Ausgangsmaterial unter anderem luftgetrocknete Blätter des Riesenschachtelhalms (*Equisetum telmateia*) eingesetzt worden, für welche ein Ascheanteil (anorganischer oder mineralischer Anteil) von 33,37 % ermittelt wurde. Die chemische Analyse dieses Biomaterials ergab folgende Zusammensetzung: 29,33 % Kohlenstoff, 31,57 % Sauerstoff, 12,67 % Silizium, 4,02 % Wasserstoff, 1,37 % Stickstoff, 1,12% Schwefel, 0,18 % Magnesium, 0,013 % Aluminium, 2,60 % Calcium, 0,039 % Eisen, 0,012 % Strontium, 0,63 % Kalium, 0,0085 % Mn, 0,0032 % Titan, 0,10 % Phosphor und 0,32 % Chlor. Eine Restfeuchte von 4,60 % wurde in dem Biomaterial bestimmt. Nach Trocknung bei 105 °C kann der Siliziumdioxidanteil im Pflanzenmaterial mit 27,15 % festgestellt werden.

Das getrocknete Pflanzenmaterial wurde in einer Mühle auf eine Korngröße von d < 0,5 mm aufgemahlen. Hierbei ist es unerheblich, ob die Zerkleinerung in einer Kugelmühle, Vibrationsmühle, Planetenmühle, Schneidmühle oder Schwingmühle erfolgt. Das so erhaltene Pflanzenpulver wurde zunächst mit einer verdünnten Salzsäure, bestehend aus 50 Volumenprozent aceotroper Salzsäure und 50 Volumenprozent Wasser für mindestens 15 min bis 10 h, vorzugsweise 30 min, in der Siedehitze behandelt und anschließend von der Flüssigkeit abgetrennt und getrocknet. Der Feststoffrückstand wird nun nach nachfolgend beschriebenem Temperaturregime unter normalen atmosphärischen Bedingungen getempert:

| | |
|---|---|
| 1. Schritt: | Das Probematerial wird mit ca. 10 K/min auf 100 °C aufgeheizt. |
| 2. Schritt: | Die erwärmte Probe wird nun mit 2 bis 5 K/min, vorzugsweise mit 2 K/min, auf eine Temperatur von 250 °C gebracht. |
| 3. Schritt | Das Probematerial wird nun mit 1 K/min auf eine Temperatur von 300 bis 550 °C aufgeheizt und verbleibt bei der gewählten Zieltemperatur (Endtemperatur) für 30 min bis 1000 h (Haltezeit). |

Die gewählte Endtemperatur steht mit der Haltezeit in direktem Zusammenhang. In dem hier ausgewählten Ausführungsbeispiel wird auf eine Probe, die 48 Stunden bei 425 °C getempert wurde, Bezug genommen. Am Ende dieses thermischen Vorganges bleibt ein rein weißes Pulver übrig, welches eine Oberfläche von 514 m²/g aufweist. Durch Variation der Endtemperatur und der Haltezeit lassen sich jedoch auch Pulver erhalten, bei denen Oberflächen von 560 m²/g bis 622 m²/g bestimmt wurden.

Variation der Endtemperatur und der Haltezeit bilden ein Zusammenspiel der beiden Größen: wird eine tiefe Temperatur (z.B. zwischen 300 °C und 310 °C) gewählt, so ist eine Reaktionszeit von mehreren hundert Stunden notwendig, wird eine hohe Temperatur (z.B. zwischen 540 °C und 550 °C) gewählt, so ist eine Reaktionszeit von nur einigen Minuten erforderlich. Höhere Temperaturen, insbesondere jenseits von 700° Celsius, oder noch höhere Temperaturen (z.B. 1000 °C) führen dazu, dass sich das amorphe in kristallines Siliziumdioxid umwandelt, so dass wesentliche Merkmale des Endprodukts verloren gehen.

Statt einer Reaktion bei Siedehitze ist es möglich, die Reaktion bei einer tieferen Temperatur ablaufen zu lassen, wobei sich aber die notwendige Reaktionszeit verlängern, was nicht bevorzugt ist.

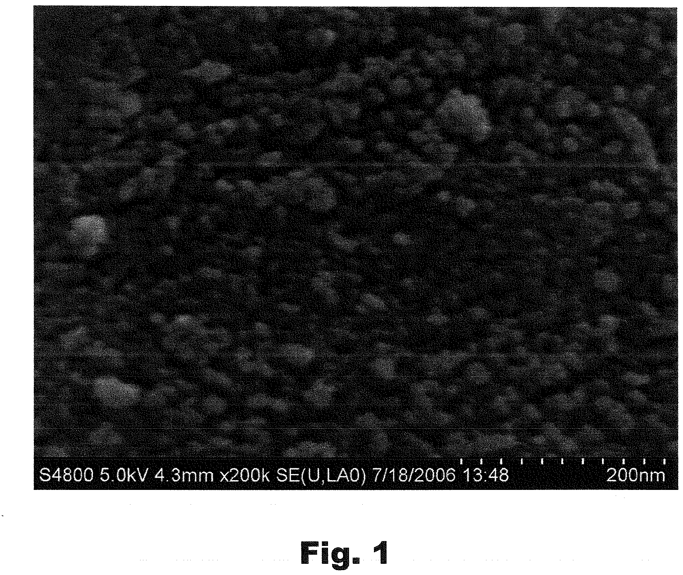

Die zunächst nach diesem thermischen Prozess vorliegenden Feststoffagglomerate, die einen d₅₀-Wert von 20-25 µm aufweisen sind mechanisch instabil und zerfallen, völlig überraschend, bei jeglicher weiteren Verarbeitung. Die bei dieser weiteren Verarbeitung dann vorliegenden primären Siliziumdioxidpartikel haben eine Größe von 10 nm und weisen eine kugelförmige Gestalt auf, die in dem rasterelektronenmikroskopischen Bild des biogenen Siliziumdioxids nach Fig. 1 dargestellt ist.

Der Siliziumdioxidanteil im Endprodukt liegt bei 99,6 %. Einige der im Ausgangsmaterial enthaltenen Begleitbestandteile anorganischer Natur werden bei diesem Verfahren um ein bis zwei Zehnerpotenzen abgereichert. Eine Spurenanalyse an dem isolierten biogenen Siliziumdioxid führte zu nachfolgenden Daten: 0,61 % Wasserstoff, 0,04 % Stickstoff, 0,04 % Schwefel, 0,077 % Magnesium, 0,022 % Aluminium, 004 % Calcium, 0,020 % Eisen, 0,0004 % Strontium, 0,11 % Kalium, 0,0009 % Mn, 0,012 % Titan, 0,0057 % Phosphor und 0,0006 % Chlor.

Das Verfahren wurde ebenfalls an mehr als 450 verschiedenen Proben von unterschiedlichen Pflanzenmaterialien getestet, hierzu gehören:

| Name | | Probenzahl |
|---|---|---|
| Winterschachtelhalm | Equisetum hyemale | 133 |
| Riesenschachtelhalm | Equisetum telmateia | 160 |
| Ackerschchtelhalm | Equisetum arvense | 13 |
| Teichschachtelhalm | Equisetum fluviatili | 2 |
| Waldschachtelhalm | Equisetum sylvaticum | 2 |
| Wiesenschachtelhalm | Equisetum prtense | 3 |
| bunter Schachtelhalm | Equisetum variegatum | 1 |
| subtropischer Riesenschachtelhalm | Equisetum giganteum | 5 |
| Sumpfschachtelhalm | Equisetum palustre | 12 |
| Gemeines Schilf | Arundo phragmites | 45 |
| Pfahlrohr | Arundo donax | 5 |
| Chinaschilf | Miscanthus sinensis | 45 |
| Pampasgras | Cotaderia selloana | 1 |
| Brennnessel | Urtica dioica | 3 |
| Cannabis | Cannabis sativa | 10 |
| Wegwarte | Cichorium Intybus | 1 |
| Topinambur | Helianthus tuberosus | 3 |
| Vogelköterich | Polygonum aviculäre | 5 |
| Ricinus | Ricinus communis | 3 |
| Sesam | Sesamum indicum | 3 |
| Vogelmiere | Stellaria media | 1 |
| Nordmanntanne | Abies nordmanniana | 1 |
| Weichweizen | Triticum aestivum | 6 |
| Saathafer | Avena sativa | 16 |
| Gerste | Hordeum vulgare | 2 |
| Strandroggen | Leymus arenarius | 2 |
| Salzschlickgras | Spartina anglica | 2 |
| Wasserhyazinthe | Eichornia crassipes | 1 |
| Kakao | Theobroma cacao | 1 |
| Reis | Oryza sativa | 14 |
| Schneeflechte | Cetraria nivalis | 1 |
| Strauchfl echte | Stereocaulon pascale | 1 |

Exemplarisch ist oben im dargestellten Ausführungsbeispiel mit dem Ausgangsmaterial des Riesenschachtelhalms verwiesen und beschrieben worden; in vergleichbarer Art kann das Verfahren mit analogen Ergebnissen mit z.B. dem Winterschachtelhalm, verschiedenen Reisspelzen aus Asien, Europa und Südamerika, Brennnessel, gemeinem Schilf, Chinaschilf, Weizen, Hafer, Gerste u. a .m. durchgeführt werden. Die Beschreibung des Verfahrens und die Ergebnisse sind redundant zu dem dargestellten Ausführungsbeispiel.

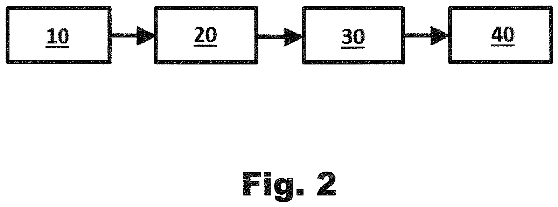

Die Fig. 2 zeigt in schematischer Weise einen Verfahrensablauf gemäss einem Ausführungsbeispiel der Erfindung zur Gewinnung von Siliziumdioxid aus nachwachsenden Rohstoffen.

Mit dem Bezugszeichen 10 ist der erste Verfahrensschritt der Vorbereitung des Ausgangsmaterials bezeichnet. Dabei kann es sich um Equisetum telmateia Blätter handeln, die luftgetrocknet werden.

Dann wird dieses Ausgangsmaterial, vorteilhafterweise in zerstossenem Zustand, einer nasschemischen Behandlung mit Salzsäure unterzogen, mit dem Bezugszeichen 20 versehen. Die Mischung aus Biomaterial und Säure führt zu einer Abreicherung der anorganischen Bestandteile gemäss den oben spezifizierten Verfahrensschritten.

Danach wird das Zwischenprodukt in eine thermische Behandlung, mit dem Bezugszeichen 30 versehen, gegeben, um eine Abreicherung von organischen Bestandteilen zu erreichen, wobei die oben genannten niedrigeren Temperaturen gegenüber bekannten Verfahren Verwendung finden.

Schliesslich ergibt sich nach Bezugszeichen 40 ein Siliziumoxidendprodukt, welches spontan in die gewünschten nanoskaligen Phase zerfällt und damit die erwünschten Oberflächeneigenschaften aufweist.

**BEZUGSZEICHENLISTE**

| | | | |
|---|---|---|---|
| 10 | Vorbereitung des Ausgangsmaterials | 30 | thermische Behandlung |
| | | 40 | Aggregatzerfall zum Endprodukt |
| 20 | nasschemische Behandlung | | |

## Patentansprüche

1. Verfahren zur Herstellung von hochdispersem oberflächenreichem Siliziumdioxid aus Pflanzen als nachwachsende Rohstoffe mit den Verfahrensschritten:
a) Bereitstellen (10) von getrockneten Pflanzen mit einem Siliziumanteil von grösser 2 Gewichtsprozent als Pflanzenmaterial ausgewählt aus der Gruppe aller Arten in der Gattung der Schachtelhalmgewächse, insbesondere Equisetales und Farne allgemein, der europäischen Lärche sowie der gemeinen Fichte aus der Ordnung der Kiefernartigen und aus der Familie der Süßgräser alle Schilf-, Hafer-, Gerste-, Roggen-, Weizen- Reis- und Bambusarten,
b) Nasschemische Behandlung (20) des getrockneten Pflanzenmaterials mit einer sauren Lösung, umfassend zwischen 20 und 50 Volumenprozent azeotroper Salzsäure und zwischen 80 und 50 Volumenprozent Wasser, über eine vorbestimmte Standzeit zwischen 1 Minute und 10 Stunden,
c) Abtrennen und Trocknen des nasschemisch behandelten Pflanzenmaterials zu einem Feststoffrückstand, und
d) Tempern (30) des Feststoffrückstandes bei einer Tempertemperatur zwischen 300 und 700 °C, insbesondere bis 550 °C, über eine Haltezeit von 30 Minuten bis 1000 Stunden zu einem Feststoffagglomerat, das im wesentlichen spontan zu Siliziumdioxidnanopartikeln zerfällt (40),
wobei bei einer Tempertemperatur zwischen 300 °C und 310 °C eine Haltezeit von 10 Stunden bis zu mehreren hundert Stunden vorgesehen wird, und dass bei einer Tempertemperatur zwischen 540 °C und 550 °C eine Haltezeit zwischen 1 Minute und 15 Minuten vorgesehen wird.

2. Verfahren nach Anspruch 1, **dadurch gekennzeichnet, dass** nach dem Bereitstellen des getrockneten Pflanzenmaterials ein Verfahrensschritt des Zerkleinerns des Pflanzenmaterials auf eine Korngrösse von kleiner als 1 Millimeter, bevorzugt kleiner als 0,5 Millimeter, vorgesehen ist.

3. Verfahren nach einem der Ansprüche 1 oder 2, **dadurch gekennzeichnet, dass** die nasschemische Behandlung in der Siedehitze stattfindet.

4. Verfahren nach einem der Ansprüche 1 bis 3, **dadurch gekennzeichnet, dass** die Standzeit zwischen 15 Minuten und 1 Stunde, bevorzugt 30 Minuten, beträgt.

5. Verfahren nach einem der Ansprüche 1 bis 4, **dadurch gekennzeichnet, dass** das Tempern aus vier Unterschritten besteht:
d1) Rasches Erwärmen des Feststoffrückstandes auf einen ersten Temperaturschwellwert,
d2) Mittelschnelles Erwärmen des Feststoffrückstandes von dem ersten auf einen zweiten Temperaturschwellwert,
d3) Langsames Erwärmen des Feststoffrückstandes von dem zweiten auf die Tempertemperatur, und
d4) Halten der Tempertemperatur des Feststoffrückstandes für die besagte Haltezeit.

6. Verfahren nach Anspruch 5, **dadurch gekennzeichnet, dass** das rasche Erwärmen zwischen 2 und 5 mal so schnell in Kelvin/Minute durchgeführt wird wie das mittelschnelle Erwärmen und dass das langsame Erwärmen zweimal bis fünfmal langsamer wie das mittelschnelle Erwärmen vorgenommen wird, insbesondere mit 10 K/min, 2 bis 5 K/min, beziehungsweise mit 1 K/min.

7. Verfahren nach Anspruch 5 oder 6, **dadurch gekennzeichnet, dass** der erste Temperaturschwellwert 100 °C ist und dass der zweite Temperaturschwellwert 250 °C ist.

8. Verfahren nach einem der Ansprüche 1 bis 7, **dadurch gekennzeichnet, dass** das Pflanzenmaterial ausgewählt ist aus der Gruppe, umfassend: Equisetum hyemale, Equisetum telmateia, Equisetum arvense, Equisetum fluviatili, Equisetum sylvaticum, Equisetum prtense, Equisetum variegatum, Equisetum giganteum, Equisetum palustre, Arundo phragmites, Arundo donax, Miscanthus sinensis, Cotaderia selloana, Urtica dioica, Cannabis sativa, Cichorium Intybus, Helianthus tuberosus, Polygonum aviculäre, Ricinus communis, Sesamum indicum, Stellaria media, Abies nordmanniana, Triticum aestivum, Avena sativa, Hordeum vulgare, Leymus arenarius, Spartina anglica, Eichornia crassipes, Theobroma cacao, Oryza sativa, Cetraria nivalis, und Stereocaulon pascale.

## Claims

1. Method of manufacturing highly dispersible silicon dioxide with a large surface area from plants as renewable raw materials with the process steps:
a) preparation (10) of dried plants having a silicon content of more than 2 percent by weight as plant material selected from the group of all species in the Equisetaceae (horsetail) genus, in particular Equisetales and ferns in general, the European larch and the Norway spruce from the order Pinales, and from the Poaceae family all species of reed, oat, barley, rye, wheat, rice and bamboo,
b) wet chemical treatment (20) of the dried plant material with an acidic solution comprising between 20 and 50 percent by volume of azeotropic hydrochloric acid and between 80 and 50 percent by volume of water, for a predetermined standing time of between 1 minute and 10 hours,
c) separating and drying the wet chemical treated plant material to a solid residue, and
d) heating (30) the solid residue at a temperature of between 300 and 700 °C, in particular up to 550 °C, for a holding time of 30 minutes to 1000 hours to form a solid agglomerate, which decomposes essentially spontaneously into silicon dioxide nanoparticles (40),
where at a temperature of between 300 °C and 310 °C a holding time of 10 hours to several hundred hours is envisaged, and at a temperature of between 540 °C and 550 °C a holding time of between 1 minute and 15 minutes is envisaged.

2. Method according to claim 1, **characterised in that** after the preparation of the dried plant material, a process step of grinding the plant material to a grain size of less than 1 millimetre, preferably less than 0.5 millimetres, is provided.

3. Method according to one of claims 1 or 2, **characterised in that** the wet chemical treatment takes place at boiling heat.

4. Method according to one of claims 1 to 3, **characterised in that** the standing time is between 15 minutes and 1 hour, preferably 30 minutes.

5. Method according to one of claims 1 to 4, **characterised in that** the heating consists of four sub-steps:
d1) rapid heating of the solid residue to a first temperature threshold,
d2) medium fast heating of the solid residue from the first to a second temperature threshold,
d3) slow heating of the solid residue from the second temperature to the holding temperature, and
d4) keeping the solid residue at the holding temperature for the aforementioned holding time.

6. Method according to claim 5, **characterised in that** the rapid heating is carried out between 2 and 5 times as fast in Kelvin/minute as the medium fast heating and that the slow heating is carried out two to five times slower than the medium fast heating, in particular at 10 K/min, 2 to 5 K/min, and 1 K/min, respectively.

7. Method according to claim 5 or 6, **characterised in that** the first temperature threshold is 100 °C, and that the second temperature threshold is 250 °C.

8. Method according to one of claims 1 to 7, **characterised in that** the plant material is selected from the group comprising: Equisetum hyemale, Equisetum telmateia, Equisetum arvense, Equisetum fluviatili, Equisetum sylvaticum, Equisetum pratense, Equisetum variegatum, Equisetum giganteum, Equisetum palustre, Arundo phragmites, Arundo donax, Miscanthus sinensis, Cotaderia selloana, Urtica dioica, Cannabis sativa, Cichorium intybus, Helianthus tuberosus, Polygonum aviculare, Ricinus communis, Sesamum indicum, Stellaria media, Abies nordmanniana, Triticum aestivum, Avena sativa, Hordeum vulgare, Leymus arenarius, Spartina anglica, Eichornia crassipes, Theobroma cacao, Oryza sativa, Cetraria nivalis, and Stereocaulon pascale.

## Revendications

1. Procédé pour la fabrication de dioxyde de silicium fortement dispersé et à surface spécifique élevée, à partir de plantes en tant que matières premières renouvelables, comprenant les étapes de processus suivantes :
a) Fourniture (10) de plantes séchées contenant une part de silicium supérieure à 2 pour cent en poids en tant que matière végétale sélectionnée dans le groupe de toutes les espèces, dans le genre des équisétinées, en particulier les équisétales et les fougères en général, du mélèze d'Europe ainsi que de l'épicéa commun, dans l'ordre des pinales et, dans la famille des graminées, toutes les espèces de roseaux, d'avoine, d'orge, de seigle, de blé, de riz et de bambous,
b) Traitement chimique (20) par voie humide de la matière végétale séchée au moyen d'une solution acide comprenant entre 20 et 50 pour cent en volume d'acide chlorhydrique azéotropique et entre 80 et 50 pour cent en volume d'eau, pendant un temps de séjour prédéfini compris entre 1 minute et 10 heures,
c) Séparation et séchage de la matière végétale traitée chimiquement par voie humide jusqu'à obtention de matière sèche résiduelle et
d) Trempe (30) de la matière sèche résiduelle à une température comprise entre 300 et 700 °C, en particulier jusqu'à 550 °C, maintenue pendant une durée comprise entre 30 minutes et 1000 heures jusqu'à obtention d'un agglomérat de matières solides se décomposant pour l'essentiel spontanément en nanoparticules de silicium (40),
sachant qu'à une température comprise entre 300 °C et 310 °C est prévu un temps de maintien compris entre 10 heures et plusieurs centaines d'heures, et qu'à une température de trempe comprise entre 540 °C et 550 °C est prévu un temps de maintien compris entre 1 minute et 15 minutes.

2. Procédé selon la revendication 1, **caractérisé en ce qu'**après la fourniture de la matière végétale séchée est prévue une étape du processus consistant à broyer la matière végétale jusqu' à obtention d'un grain de taille inférieure au millimètre, de préférence inférieure à 0,5 millimètre.

3. Procédé selon l'une des revendications 1 ou 2, **caractérisé en ce que** le traitement chimique par voie humide se déroule dans la chaleur d'ébullition.

4. Procédé selon l'une des revendications 1 à 3, **caractérisé en ce que** la durée de maintien est comprise entre 15 minutes et 1 heure, de préférence 30 minutes.

5. Procédé selon l'une des revendications 1 à 4, **caractérisé en ce que** la trempe se compose de quatre sous-étapes :
d1) Échauffement rapide du résidu de matière solide jusqu'à une première température seuil,
d2) Échauffement moyennement rapide du résidu de matière solide, de la première température seuil vers une deuxième température seuil,
d3) Échauffement lent du résidu de matière solide de la deuxième température seuil à la température de trempe, et
d4) Maintien de la température de trempe du résidu de matière solide pendant la durée de maintien susmentionnée.

6. Procédé selon la revendication 5, **caractérisé en ce que** l'échauffement rapide, en Kelvin/minute, est effectué entre 2 à 5 fois plus vite que l'échauffement moyennement rapide et que l'échauffement lent est effectué entre deux et cinq fois plus lentement que l'échauffement moyennement rapide, notamment à des vitesses de 10 K/min, 2 à 5 K/min et 1 K/min.

7. Procédé selon la revendication 5 ou 6, **caractérisé en ce que** la première valeur de température seuil s'élève à 100 °C et que la deuxième valeur de température seuil s'élève à 250 °C.

8. Procédé selon l'une des revendications 1 à 7, **caractérisé en ce que** la matière végétale est choisie dans le groupe comprenant : Equisetum hyemale, Equisetum telmateia, Equisetum arvense, Equisetum fluviatili, Equisetum sylvaticum, Equisetum pratense, Equisetum variegatum, Equisetum giganteum, Equisetum palustre, Arundo phragmites, Arundo donax, Miscanthus sinensis, Cotaderia selloana, Urtica dioica, Cannabis sativa, Cichorium Intybus, Helianthus tuberosus, Polygonum aviculare, Ricinus communis, Sesamum indicum, Stellaria media, Abies nordmanniana, Triticum aestivum, Avena sativa, Hordeum vulgare, Leymus arenarius, Spartina anglica, Eichornia crassipes, Theobroma cacao, Oryza sativa, Cetraria nivalis, et Stereocaulon pascale.
